Europäisches Patentamt

European Patent Office

Office européen des brevets

(11) Veröffentlichungsnummer: **0 355 001**
**A2**

## (12) EUROPÄISCHE PATENTANMELDUNG

(21) Anmeldenummer: 89114064.2

(22) Anmeldetag: 29.07.89

(51) Int. Cl.⁴: **B32B 27/00 , C08J 3/28**

(30) Priorität: 13.08.88 DE 3827598

(43) Veröffentlichungstag der Anmeldung:
21.02.90 Patentblatt 90/08

(84) Benannte Vertragsstaaten:
**AT BE CH DE ES FR GB IT LI NL**

(71) Anmelder: **BAYER AG**

**D-5090 Leverkusen 1 Bayerwerk(DE)**

(72) Erfinder: **Sirinyan, Kirkor, Dr.**
**Humperdinckstrasse 12**
**D-5060 Bergisch-Gladbach 2(DE)**
Erfinder: **Wecker, Dieter, D.I.**
**Niessenstrasse 45**
**D-4150 Krefeld 1(DE)**

(54) Verfahren zur Herstellung eines Verbundsystems aus einem gummielastischen Material und einer Polyurethan-Schaumstoffschicht.

(57) Ein Verbundsystem aus einem gummielasti-schen Material und einer Polyurethan-Schaumstoff-schicht wird hergestellt, indem man die Oberfläche des gummielastischen Materials tempert, einer Plasmabehandlung aussetzt und danach an sie eine Polyurethan-Schaumstoffschicht anschäumt. Es kann als Dämmstoff verwendet werden.

EP 0 355 001 A2

# Verfahren zur Herstellung eines Verbundsystems aus einem gummielastischen Material und einer Polyurethanschaumstoff-Schicht

Die Auslösung chemischer Reaktionen durch Plasmen ist schon seit langem bekannt (s. beispielsweise H.V. Boenig Plasma Science and Technologie, Carl Hanser Verlag, München, Wien (1982)). Die Wechselwirkungen von Plasmen mit Substratoberflächen sind vielfältig und komplex. Dabei kann die Substratoberfläche je nach dem verwendeten Gas gereinigt, gespalten oder durch reaktive Atome geätzt werden, was beispielsweise in der Halbleiterfertigung intensiv genützt wird (s. beispielsweise M. Verzugopalan et al.: Plasma Chemistry III, Topics in Curent Chemistry 94, Springer Verlag, Berlin (1980)).

Das Aufschäumen von haftfesten Polyurethan-Auflagen auf gummielastischen Schuhsohlen ist ein immer noch nicht völlig gelöstes Problem.

Zum Aufbringen von gut haftenden geschäumten Polyurethan-Auflagen ist bisher ein Entfetten und anschließend ein naßchemisches Ätzen der Gummioberfläche mit umweltbelastenden Oxidantien und anschließend das Aufbringen einer Klebeschicht, die vor dem Anschäumen der PU-Schicht mittels Wärme aktiviert werden muß, erforderlich. Eine naßchemische Oxidantienbehandlung der Gummioberfläche hat den weiten Nachteil, daß sie zur Bildung von Rissen und Vakuolen an der Gummioberfläche führt, was die mechanischen Eigenschaften, z.B. Langzeitstabilität des PU-Gummiverbundes, negativ beeinflußt.

Aus der Literatur geht hervor, daß beispielsweise zur Vorbehandlung von ABS-(Acrylnitril-, Butadien- und Styrol) Pfropfcopolymerisaten eingesetzte wäßrige Oxidantien die kautschukelastischen Polybutadienteilchen abbeizen, so daß es zur Bildung von Kavernen und Vakuolen an der ABS-Oberfläche kommt. An diesen Vakuolen verankern sich die im zweiten Schritt abgeschiedenen Auflagen, wie Metalle und Kunststoffe fest. Bei diesen Systemen wird die so erzielte Haftung mittels der Druckknopf-Theorie erklärt (s. beispielsweise R. Weiner Kunststoff-Galvanisierung, Eugen. G. Leuze Verlag, Saulgau/Württ. (1973)).

Für die Haftung der Polyurethan-Auflagen an der vorgebeizten Gummioberfläche ist auch der besagte Haftmechanismus relevant. Die durch naßchemische Ätzen erzielten Vakuolen und Kavernen weisen eine mittlere Größe von mehreren μm auf und können sogar bei einer 200 fachen Vergrößerung mit Hilfe eines Rasterelektronenmikroskops nachgewiesen werden.

Aufgabe der Erfindung war eine Polyurethan-Schaumstoffschicht auf der Oberfläche eines gummielastischen Materials haftfest aufzubringen, ohne die Materialoberfläche vorher mit üblichen oxidierenden flüssigen Medien zu ätzen bzw. oxidativ aufzurauhen.

Diese Aufgabe wird überraschenderweise dadurch gelöst, indem man die Oberfläche gummielastischen Materials einer Plasmabehandlung unterwirft und dann an sie eine Polyurethan-Schaumstoffschicht anschäumt.

Gegenstand der Erfindung ist somit ein Verfahren zur Herstellung eines Verbundsystems aus einem gummielastischen Material und einer Polyurethan-Schaumstoffschicht, das darin besteht, daß man die Oberfläche des gummielastischen Materials (vorzugsweise bei einer Temperatur $\geq$ 130 $^\circ$C + $T_g$ (Glasumwandlungstemperatur)) tempert und anschließend einer Plasmabehandlung aussetzt und danach an sie ein Polyurethan-Schaumstoffschicht anschäumt.

Ohne den Umfang der Erfindung einzuschränken, wird die Temperung des jeweiligen Gummimaterials im Temperaturbereich von 75 $^\circ$C bis zum Zersetzungspunkt im Verlaufe von 10-180 Minuten, besonders bevorzugt jedoch im Temperaturbereich von 80-140 $^\circ$C im Verlaufe von 30-120 Minuten, vorgenommen. Selbstverständlich kann vor der Temperung das Material einer nicht ätzenden Lösemittelbehandlung ausgesetzt werden. Nach unserer bisherigen Beobachtung wird durch den Temperungsschritt die Gummioberfläche so modifiziert, daß eine Lösemittelbehandlung in den meisten Fällen nicht erforderlich ist. Dadurch wird ein umweltschonendes Aufbringen von gut haftenden PU-Auflagen auf gummielastischen Materialien im technischen Maßstab realisierbar.

Die Plasmabehandlung wird vorzugsweise im Hochfrequenz-Plasma, mit Mikrowellen oder in einem kombinierten Hochfrequenz-Plasma mit Magnetfeldunterstützung, vorgenommen. Als Plasmagase werden bevorzugt Ar, He, $O_2$, $N_2$, $SO_3$, $SO_2$, $CF_4$ oder $CF_2 = CF_2$ bzw. ihre Mischungen miteinander eingesetzt.

Die Erfindung betrifft ferner auch Verbundsysteme aus einem gummielastischen Material und einer Polyurethan-Schaumstoffschicht, die nach dem erfindungsgemäßen Verfahren erhältlich sind.

Schließlich betrifft die Erfindung auch die Verwendung dieser Verbundsysteme zur Herstellung von Schuhsohlen und als Dämmstoffe.

Überraschenderweise bleibt die Geometrie der Kunststoffoberfläche durch die Plasmabehandlung unverändert.

Ferner ist es überraschend, daß durch die Plasmabehandlung trotz der dadurch bewirkten Erhöhung des Vernetzungsgrades bzw. der Dichte der Materialoberfläche eine gute Haftung zwischen dem gummielastischen Material und der Schaumstoffschicht erzielt wird.

Selbstverständlich kann das Material vor oder nach der Temperung mit nicht ätzenden Flüssigkeiten wie Wasser; Alkohole vorzugsweise Ethanol, Methanol und Isopropanol; Ketone wie Aceton und Methylethylketon, Chlorkohlenwasserstoffe wie $CCl_2 = CCl_2$, $CCl_4$, $CH_3-CCl_3$ und $CCl_2H-CCl_2H$; Kohlenwasserstoffe wie n-Hexan, n-Pentan, Ligroin, Petrolether und Waschbenzin; Dimethylformamid, Dimethylsulfoxid bzw. deren Mischung untereinander entfettet werden. Zur Erhöhung der Reinigungswirkung können diese Lösemittel mit neutralen, anionischen und kationischen Tensiden bzw. mit quarternären Aminen, z.B. in Mengen von 0,1 bis 5,0 Gew.-% versetzt werden. In diesem Zusammenhang sei auf Tetrabutylammoniumbromid, Dimethylbenzylammoniumchlorid, Benzoesulfonsäure-Na-salz, Isononylphenol-heptaglykolether hingewiesen.

Nach unseren bisherigen Beobachtungen kann eine Vorreinigung durch den Temperungsschritt vermieden werden. Die Temperung kann sowohl unter Luft- als auch unter $N_2$, $O_2$, Ar und andere Inertgasatmosphären vorgenommen werden.

Das erfindungsgemäße Verfahren hat folgende wichtige Vorteile gegenüber dem herkömmlichen Vorbehandeln mit oxidierenden Medien:
- Die mechanische Eigenschaften des gummielastischen Materials werden durch die Plasmabehandlung bzw. durch die Temperung nicht negativ beeinflußt.
- Die nach dem erfindungsgemäßen Verfahren aufgebrachten Polyurethan-Schaumstoffschichten weisen eine sehr gute Haftfestigkeit nach DIN 53 357 ≥ 30 N/cm auf.
- Hierbei entstehen keine umweltbelastenden Abwasser-und insbesondere Abluftprobleme.
- Die Plasmabehandlung ist mit geringerem Aufwand verbunden.
- Durch die Temperung können alle gummielastischen Materialien überraschenderweise unter gleichen Plasmabedingungen für ein haftfestes Aufbringen von PU-Auflagen vorbehandelt werden. Eine Tatsache, die bei hochwertigen aus unterschiedlichen Gummisorten aufgebauten Schuhsohlen von größter Wichtigkeit ist.

Die Plasmabehandlung ist an sich bekannt. Zur Durchführung der Plasmabehandlung sind sowohl herkömmliche Plasmaanlagen, wie beispielsweise HF (Hochfrequenz)-Plasma im Frequenzbereich von beispielsweise 27,12 bis 13,56 MHz als auch Mikrowellenplasmaanlagen im Frequenzbereich, beispielsweise von 2,45 GHz (v. beispielsweise M. Neusch et. al.: Vakuum, 34, 959 (1984) und insbesondere kombinierte Systeme HF-Plasma mit Magnetfeltunterstützung, geeignet.

Die Behandlungzeit kann von 0,1 sec bis zu mehreren Minuten variiert werden, wobei Behandlungszeiten von 1 bis 360 sec bevorzugt, von 10 bis 120 sec besonders bevorzugt sind. Man arbeitet in der Regel bei einem Gasdruck zwischen 0,01 und 100 mbar, vorzugsweise zwischen 0,1 und 10 mbar.

Die Behandlungstemperatur kann von Raumtemperatur bis 160°C variiert werden, wobei Temperaturen zwischen 30 und 60°C bevorzugt sind.

Zur Durchführung der Plasmareaktion können sowohl Inertals auch Reaktivgase eingesetzt werden. Für das erfindungsgemäße Verfahren besonders geeignet sind $O_2$, $N_2$, He, Ar, $F_2$, $Cl_2$, $Br_2$, niedermolekulare Fluorkohlenstoffverbindungen wie $C_2F_4$, $CF_4$, Perfluorpropen und Perfluorcyclohexan, bis zu einem gewissen Grade ($C_8$) auch Alkene oder Alkane, z.B. Cyclohexan, ferner $H_2S$, $SO_3$, $SO_2$, $NH_3$, $NO_2$, $N_2O_5$ bzw. deren Mischungen untereinander.

Als gummielastische Materialien kommen beliebige, vulkanisierbare Polymerisate oder Copolymerisate von olefinisch ungesättigten Monomeren in vulkanisierter Form in Betracht, die im allgemeinen eine Glasübergangstemperatur $T_g$ von -80°C bis +40°C, vorzugsweise von -20°C bis +10°C aufweisen. Es handelt sich vorzugsweise um nichtporöse, massive Materialien. In chemischer Hinsicht hendelt es sich um solche auf Basis von Polymerisaten oder Copolymerisaten von Butadien, Isopren, Styrol, Acrylnitril, Chloropren, Ethylen, Propylen und/oder Norbordien, Dimethyldichlorsilan und Phenyltrichlorsilan. Besonders bevorzugt handelt es sich bei den gummielastischen Maerialien um solche auf Basis von Polybutadien, Polyisopren, Polychloropren, Styrol-Butadien- und Acrylnitril-Butadien-Kautschuk, Silicone wie Polydimethylsiloxan. Auch vulkanisierter Naturkautschuk ist gut geeignet. Es können ebenfalls Mischungen derartiger Polymerisate oder Copolymerisate, gegebenenfalls auch mit anderen Polymeren zum Einsatz gelangen. In diesem Zusammenhang sei auf Polyamide, Polyurethane, Polyether, Polyester, Polyamidimide, Polystyrole, Polyethylene, Polyvinylchlorid und Polypropylene hingewiesen. Ihre Mengen in den Kautschukmatrices können zwischen 0,1-30 Gew.-% variiert werden. Auch halogenierte wie fluorierte, bromierte oder chlorierte Derivate der besagten Kautschuke können zur Durchführung des Verfahrens eingesetzt werden.

Kautschuke, deren Matrices Hilfsmittel wie Wärme-, Ozon-, UV- und IR-Stabilisatoren, Radikalfänger, Fungizide, organische und anorganische Füllstoffe wie Kreide, Talkum, Kaolin und $Al_2O_3$, Farbstoffe, Ruße und Pigmente enthalten, sie ebenfalls zur Durchführung des Verfahrens geeignet. Mit üblichen Hilfsmitteln vulkanisierte, gummielastische Materialien werden zur Durchführung des Verfahrens besonders eingesetzt.

Zur Herstellung der Polyurethan-Schaumstoffschicht werden erfindungsgemäß als Ausgangskomponenten verwendet:

. Aliphatische, cycloaliphatische, araliphatische, aromatische und heterocyclische Polyisocyanate, wie sie z.B. von W. Siefken in Justus Liebigs Annalen der Chemie, 362, Seiten 75-136, beschrieben werden beispielsweise solche der Formel Q(NCO)$_n$

in der

n = 2 bis 4, vorzugsweise 2 bis 3,

und

Q einen aliphatischen Kohlenwasserstoffrest mit 2 bis 18, vorzugsweise 6 bis 10 C-Atomen,

einen cycloaliphatischen Kohlenwassertoffrest mit 4 bis 15, vorzugsweise 5 bis 10 C-Atomen,

einen aromatischen Kohlenwassertoffrest mit 6 bis 15, vorzugsweise 6 bis 13 C-Atomen,

oder einen araliphatischen Kohlenwasserstoffrest mit 8 bis 15, vorzugsweise 8 bis 13 C-Atomen

bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B.: das 2,4-und 2,6-Toluylendiisocyanat, sowie beliebige Gemische dieser Isomeren ("TDI"); Polyphenylpolymethylen-polyisocyanate, wie sie durch Anilin-Formaldehyd-Kondensation und anschließende Phosgenierung hergestellt werden ("rohres MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Verbindungen mit mindestens zwei gegenüber Isocyanaten reaktionsfähigen Wasserstoffatomen von einem Molekulargewicht in der Regel von 400 bis 10 000. Hierunter versteht man neben Aminogruppen, Thiolgruppen oder Carboxylgruppen aufweisende Verbindungen, insbesondere zwei bis acht Hydroxylgruppen aufweisende Verbindungen, speziell solche vom Molekulargewicht 1000 bis 6000, vorzugsweise 2000 bis 6000, z.B. mindestens zwei, in der Regel zwei bis acht, vorzugsweise aber 2 bis 6, Hydroxylgruppen aufweisende Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden.

3. Gegebenenfalls Verbindungen mit mindestens zwei gegenüber Isocyanaten reaktionsfähigen Wasserstoffatomen und einem Molekülgewicht von 32 bis 399. Auch in diesem Fall versteht man hierunter Hydroxylgruppen und/oder Amingruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

4. Wasser und/oder leicht flüchtige organische Substanzen als Treibmittel.

5. Gegebenenfalls Hilfs- und Zusatzmittel wie

a) Katalysatoren der an sich bekannten Art,

b) oberflächenaktive Zusatzstofe, wie Emulgatoren und Schaumstabilisatoren,

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigment oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe .werden beispielsweise in der DE-OS 2 732 292, Seiten 21-24 beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben, von Vieweg und Höchtlen, Carl-Hanser-Verlag, München 1968, z.B. auf den Seiten 103-113, beschrieben.

Vorzugsweise handelt es sich bei den Schaumstoffschichten der erfindungsgemäßen Verbundsysteme um solche auf Basis von halbharten Polyurethanschaumstoffen des Dichtebreichs 0,2-0,8, vorzugsweise 0,3-0,5 g/m$^3$ und der Härte Shore A von 30 bis 90, vorzugsweise 40 bis 60.

Die Verbindung zum Verbundmaterial erfolgt in der Regel gleichzeitig mit der Herstellung des Polyurethans. Die Reaktionskomponenten werden dabei nach dem an sich bekannten Einstufenverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Das Anschäumen der Polyurethan-Schaumstoffschicht kann unter üblichen Bedingungen, beispielsweise zwischen Raumtemperatur und 150°C, vorgenommen werden. Der Arbeitsdruck kann zwischen dem normalen Atmosphärendruck und 5 bar variiert werden, wobei die Arbeitsdrucke zwischen 0,7 bis 1,5 bar bevorzugt sind.

Selbstverständlich können schäumfähige Polyurethansysteme, die anorganische und organische Füllstoffe wie $TiO_2$, Kaolin, Gips, Talkum und Kreide, Pigmente, Farbstoffe, PU-Katalysatoren, PU-Hitze und UV-Stabilisatoren und Fungizide enthalten, zur Durchführung des Verfahrens eingesetzt werden.

Die Schichtdicke der Polyurethan-Schaumstoffschicht kann je nach dem Anwendungsfall zwischen 1 bis 50 mm, vorzugsweise zwischen 2 und 20 mm, variiert werden. Für das erfindungsgemäße Verfahren besonders geeignet sind Folien, Platten bzw. Formkörper und Profile, die kontinuierlich durch das Plasma geführt werden können. Ein diskontinuierlicher Betrieb ist jedoch ebenfalls möglich.

Die erfindungsgemäßen Verbundsysteme finden z.B. als Schuhsohlen und Dämmstoffe (z.B. für Schallschutz) Anwendung.

Beispiel 1

Handelsübliche Gummiplatten der Fa. Metzeler, 8000 München, vom Typ STX 89 auf Basis eines Gemisches aus Polybutadien und Naturkautschuk mit den Abmessungen von 100 x 150 x 2 mm, werden bei 120°C im Verlauf von 30 Minuten im Trockenschrank getempert und dann auf die untere Elektrode des HF-Plamareaktors gelegt. Der Plasmareaktor wird mit technischem Argon gespült, anschließend auf einen Druck von ca. 0,6 mbar evakuiert und das Ar-Plasma gezündet. Die Arbeitsfrequenz des Plasmasystems beträgt 27,12 MHz, die Elektrodentemperatur ca. 30°C und die Leistung ca. 140 Watt. Die Proben werden nach einer Reaktionszeit con ca. 45 sec. aus dem Reaktor entfernt. Hierauf wird direkt - ohne naßchemische Ätzbehandlung - ein handelsübliches schäumfähiges Polyurethan-Reaktionsgemisch, welches unter Ausbildung eines Schaumstoffes der Dichte 0,4 g/cm³ und einer Shore A Härte von 50 aufschäumt, aufgebracht. Bei dem Reaktionsgemisch handelt es sich um ein Gemisch aus einer Polyolkomponente und einer Polyisocyanatkomponente.

Polyolkomponente:

88,7 Gew.-Teile eines Polyesterpolyols des Molekulargewichts 2000 aus Adipinsäure, Ethylenglykol und 1,4-Dihydroxybutan (Molverhältnis der Diole: 70:30)
8,0 Gew.-Teile Ethylenglykol
0,5 Gew.-Teile Wasser
0,5 Gew.-Teile Triethylendiamin
0,55 Gew.-Teile eines handelsüblichen Polysiloxanstabilisators (Stabilisator DC 193 der Fa. Dow Corning).

Polyisocyanat-Komponente:

90,0 Gew.-Teile eines NCO-Prepolymeren aus
62 Gew.-Teilen 4,4'-Diisocyanatodiphenylmethan und
38 Gew.-Teilen des in der Polyolkomponente verwendeten Polyesterdiols.

Das Polyurethan-Reaktionsgemisch wird in einer solchen Menge aufgetragen, daß sich eine Schaumstoffschicht einer Dicke von 10 mm bildet.

Man bekommt ein Polyurethan-Gummiverbunsystem in guter Haftung. Die Haftung der Polyurethan-Schaumstoffschicht - ermittelt nach DIN 53 357 - beträgt ca. 70 N/cm.

Beispiel 2

Handelsübliche Gummiplatten der Fa. Metzeler, D-8000 München, vom Typ STY 89 auf Basis eines Gemisches aus Polybutadien, Styrol-Butadien- und Naturkautschuk mit den Abmessungen von 100 x 150 x 2 mm werden unter $O_2$ bei 90°C 20 Minuten getempert und dann nach Beispiel 1 plasmabehandelt; darauf wird analog zu Beisipel 1 die dort genannte Polyurethan-Schaumstoffschicht angeschäumt.

Man erhält ein Polyurethan-Gummiverbundsystem mit guter Haftung. Die Haftung der Polyurethan-Schaumstoffschicht - ermittelt nach DIN 53 357 - beträgt ca. 80 N/cm.

Beispiel 3

Die in Beispiel 1 angegebenen handelsüblichen Gummiplatten werden mit technischem Petrolether vorgereinigt, nach Beispiel 1 unter Helium getempert und dann im Verlauf von 90 sec nach Beispiel 1 plasmabehandelt und dann aus dem Reaktor entfernt. Nach einer Lagerung von ca. 24 Stunden wird mit einem handelsüblichen schäumfähigen Polyurethan-Reaktionsgemisch auf Basis eines herkömmlichen Polyethers auf der Basis von Propylenoxid mit der mittleren Molmasse von ca. 2000 und MDI eine Polyurethan-Schaumstoffschicht von 10 mm Dicke angeschäumt. Der Schaumstoff weist eine Dichte von 0,35 g/cm$^3$ und eine Härte Shore A von 50 auf.

Zur Herstellung des Polyurethanschaumes wurde folgendes Reaktivsystem eingesetzt:

Polyolkomponente:

56,3 Gew.-Teile eines Polyetherpolyols der OH-Zahl 28, hergestellt durch Propoxlierung von Propylenglykol und anschließende Ethoxylierung des Propoxylierungsproduktes (Gewichtsverhältnis PO:EO = 70:30).
28,2 Gew.-Teile eines Polyetherpolyols der OH-Zahl 27, hergestellt durch Propoxlierung von Trimethylolpropan und anschließender Ethoxylierung des Propoxylierungsproduktes (Gewichtsverhältnis PO:CO = 78:22).
8,2 Gew.-Teile Ethylenglykol
3,3 Gew.-Teile Diethylenglykol
1,0 Gew.-Teile Wasser
1,0 Gew.-Teile Triethanolamin
0,4 Gew.-Teile Triethylendiamin
0,3 Gew.-Teile des in Beispiel 1 verwendeten Siloxanstabilisators

Polyisocyanatkomponente:

104 Gew.-Teile des in Beispiel 1 beschriebenen NCO-Prepolymeren.

Man erhält ein Polyurethan-Gummiverbandsystem mit einer Polyurethan-Schaumstoffschicht guter Haftung. Die Haftung der Polyurethan-Schaumstoffschicht - ermittelt nach DIN 53 357 - beträgt ca. 90 N/cm.

Beispiel 4

Handelsübliche Gummiplatten der Fa. Metzeler, D-8000 München, vom Typ BWN 7 auf Basis von Polybutadien mit den Abmessungen von 100 x 150 x 2 mm werden mit 1,1,2-Trichlor-1,2,2-trifluorethan vorbehandelt bei 80°C 120 Minuten unter O$_2$-Atmosphäre getempert und dann in einer herkömmlichen Plasma-Anlage der Firma Plasmaelectronic GmbH + Co., D-7024 Filderstadt, mit Ar-Plasma im Verlauf von 5 Minuten plasmabehandelt bzw. nach Beispiel 1 mit der dort beschriebenen Polyurethan-Schaumstoffschicht versehen.

Man bekommt ein Polyurethan Gummiverbundsystem mit einer guten Haftung. Die Haftung der Schaumstoffschicht -ermittelt nach DIN 53 357 - beträgt ca. 80 N/cm.

Beispiel 5

Die nach Beispiel 4 plasmabehandelte Gummiplatten werden ca. 24 Stunden gelagert und dann nach Beispiel 1 mit der dort beschriebenen Polyurethan-Schaumstoffschicht versehen. Man bekommt ein Polyurethan-Gummiverbundsystem mit einer guten Haftung. Die Haftung der Polyurethan-Schaumstoffschicht - ermittelt nach DIN 53 357 - beträgt ca. 90 N/cm.

Beispiel 6

Handelsübliche Gummiplatten der Fa. Metzeler, D-8000 München, vom Typ WC 51 auf Basis eines Gemisches aus Styrol-Butadien- und Polyisopren-Kautschuk mit den Abmessungen von 100 x 150 x 2 mm werden unter N$_2$ bei 95°C einer Stunde getempert und dann mit O$_2$-Plasma nach Beispiel 1 im Verlauf von 300 sec behandelt, dem Reaktor entnommen und anschließend nach Beispiel 1 mit der dort beschriebenen Polyurethan-Schaumstoffschicht versehen.

Man bekommt ein Polyurethan-Gummiverbundsystem mit einer guten Haftung. Die Haftung der Schäumstoffschicht - ermittelt nach DIN 53 357 - beträgt ca. 100 N/cm.

Beispiel 7

Die im Beispiel 6 angegebenen Gummiplatten werden bei 75°C unter Ar 20 Minuten getempert, nach Beispiel 1 unter O$_2$ im Verlaufe von 350 sec plasmabehandelt und dann nach Beispiel 3 mit der dort beschriebenen Polyurethan-Schaumstoffschicht versehen.

Man bekommt ein Polyurethan-Gummiverbundsystem mit einer guten Hatung. Die Haftung der Schaumstoffschicht - ermittelt nach DIN 53 357 - beträgt ca. 80 N/cm.

**Ansprüche**

1. Verfahren zur Herstellung eines Verbundsystems aus einem gummielastischen Material und einer Polyurethan-Schaumstoffschicht, dadurch gekennzeichnet, daß man die Oberfläche des gummielastischen Materials tempert, einer Plasmabehandlung aussetzt und danach an sie eine Polyurethan-Schaumstoffschicht anschäumt.

2. Verfahren nach Anspruch 1, dadurch gekennzeichnet, daß man die Oberfläche des gummielastischen Materials vor der Plasmabehandlung mit einer nicht ätzenden Lösungsmittel entfettet.

3. Verfahren nach Anspruch 1 und 2, dadurch gekennzeichnet, daß die Plasmabehandlung im Hochfrequenzplasma, mit Mikrowellen oder in einem kombinierten Hochfrequenzplasma mit Magnetfeldunterstützung vorgenommen wird.

4. Verfahren nach Anspruch 1-2, dadurch gekennzeichnet, daß man als gummielastische Materialien solche einer Glasübergangstemperatur $T_g$ von -80°C bis +40°C und als Polyurethan-Schaumstoffschicht eine solche auf Basis eines Polyurethans der Dichte 0,2-0,8 $g/cm^3$ und einer Härte Shore A von 30-90 verwendet.

5. Verfahren nach Anspruch 1 bis 4, dadurch gekennzeichnet, daß als Plasmagase Ar, He, $O_2$, $O_3$, $N_2$, $SO_3$, $SO_2$, $CF_4$ bzw. deren Mischungen untereinander eingesetzt werden.

6. Verfahren nach Anspruch 1, dadurch gekennzeichnet, daß eine Temperung bei einer Temperatur $\geq$ 130°C + $T_g$ - (Glasumwandlungstemperatur des gummielastischen Materials) vorgenommen wird.

7. Verbundsysteme aus einem gummielastischen Material und einer Polyurethan-Schaumstoffschicht, erhältlich nach den Verfahren gemäß Ansprüche 1 bis 5.

8. Verwendung der Verbundsysteme gemäß Anspruch 6 zur Herstellung von Schuhsohlen.

9. Verwendung der Verbundsysteme gemäß Anspruch 6 als Dämmstoffe.